# FASCICULE DE BREVET EUROPEEN

(11) **EP 2 657 558 B1**
(45) Date de publication et mention de la délivrance du brevet: **04.03.2015**
(21) Numéro de dépôt: 13001275.0
(22) Date de dépôt: 13.03.2013
(51) Int. Cl.: F16D 3/72

(54) **Moyen d'accouplement flexible, et transmission mécanique**
Flexibles Kopplungsmittel und mechanische Übertragung
Flexible coupling means, and mechanical transmission

(30) Priorité: 27.04.2012 FR 1201238
(43) Date de publication de la demande: 30.10.2013
(73) Titulaire: Airbus Helicopters, 13725 Marignane Cedex (FR)
(72) Inventeur: Berthalon, Sylvain, F-13090 AIX EN Provence (FR)
(74) Mandataire: Pouillot, Laurent Pierre Paul

(56) Documents cités:
- WO-A1-2010/022862
- GB-A- 2 043 207
- US-A- 4 133 188

## Description

La présente invention concerne un moyen d'accouplement flexible qui tolère des déplacements angulaires et axiaux pour lier deux organes mécaniques tournants. Le moyen d'accouplement lie par exemple un arbre de transmission à une pièce mécanique telle qu'un turbomoteur de giravion. L'invention concerne aussi une transmission mécanique munie du moyen d'accouplement flexible.

Par conséquent, l'invention se situe dans le domaine technique de la transmission de puissance d'un organe mécanique à un autre, notamment des organes mécaniques d'un giravion.

En effet, la plupart des giravions construits actuellement sont équipés d'au moins un turbomoteur à turbine libre. La puissance est alors prélevée sur un étage basse pression de la turbine libre, lequel étage est mécaniquement indépendant de l'ensemble du compresseur et de l'étage haute pression du turbomoteur. La turbine libre d'un turbomoteur tournant généralement entre 20 000 et 50 000 tours par minute, une boîte de réduction de la vitesse de rotation est nécessaire pour la liaison au rotor principal du giravion dont la vitesse de rotation est sensiblement comprise entre 200 et 400 tours par minute: il s'agit de la boîte de transmission principale de puissance dénommée parfois « boîte de transmission de puissance » et connue sous l'acronyme BTP.

Dans ces conditions, le turbomoteur est relié à la boîte de transmission principale du giravion via au moins un arbre de transmission tournant autour de son axe de rotation à une vitesse souvent supérieure à 5000 tours par minute.

De même, un giravion peut comporter un rotor arrière entraîné par au moins un arbre de transmission de puissance pour le contrôle du mouvement en lacet du giravion.

D'une façon générale, un arbre de transmission doit être solidement fixé par des moyens d'accouplement aux organes mécaniques qu'il doit mettre en relation.

De plus, ces moyens d'accouplement doivent permettre à l'arbre de transmission de transférer la puissance développée par un organe mécanique à un autre dans des conditions extrêmes, à savoir lorsque les organes mis en relation ne sont pas correctement alignés l'un par rapport à l'autre.

Un moyen d'accouplement d'un arbre de transmission à un organe mécanique est alors dimensionné pour autoriser un désalignement axial et angulaire entre l'arbre de transmission et l'organe mécanique.

On connaît un moyen d'accouplement autorisant ces désalignements muni d'un premier organe annulaire et d'un deuxième organe annulaire.

Chaque organe annulaire comporte un disque annulaire flexible de fine épaisseur s'étendant radialement d'une base vers une périphérie externe. La base est solidaire d'un moyen de fixation à un organe tournant, tel qu'un arbre de transmission.

Chaque disque annulaire est dénommé parfois « diaphragme ». Le terme diaphragme est dès lors utilisé par la suite par commodité.

Dès lors, les deux organes annulaire sont reliés l'un à l'autre uniquement via la périphérie externe de leur diaphragme. Ces périphéries externes peuvent être fixées par soudure, ou encore à l'aide de boulons et d'écrous de blocage par exemple.

Les moyens d'accouplement à diaphragmes proposent une solution intéressante pour réaliser la liaison d'organes tournants susceptibles d'être désalignés.

De tels moyens d'accouplement à diaphragmes possèdent un niveau de fiabilité relativement élevé grâce à un nombre réduit de pièces. Néanmoins, les moyens d'accouplement à diaphragmes présentent des diaphragmes de faibles épaisseurs pouvant induire une certaine fragilité en dehors des désalignements axiaux et angulaires nominaux pris en compte lors de leur dimensionnement.

Le document US 4 133 188 propose un moyen d'accouplement flexible à diaphragmes visant à pallier une rupture desdits diaphragmes.

Ce moyen d'accouplement comporte une paire de diaphragmes pour permettre la transmission d'un couple entre deux organes tournants tout en autorisant un désalignement axial et angulaire entre ces deux organes.

De plus, le moyen d'accouplement inclut un dispositif de secours de transmission de couple par cannelures longitudinales.

Lorsque les diaphragmes sont liés l'un à l'autre, la transmission du couple entre les organes reliés est effectuée par ces diaphragmes.

Par contre, l'accouplement est réalisé par le dispositif de secours en cas de ruptures des diaphragmes.

Ce moyen d'accouplement est intéressant. Cependant, le moyen d'accouplement comporte un nombre relativement important de pièces mécaniques ce qui complexifie sa fabrication.

Les documents US 5 407 386 et EP 0 026 681, présentent aussi des moyens d'accouplement munis d'un dispositif de secours à cannelures.

Le document US 4 560 364 présente un moyen d'accouplement pourvu d'un premier membre fixé à un premier organe tournant et d'un deuxième membre fixé à un deuxième organe tournant. Le premier membre inclut un premier diaphragme fixé à un deuxième diaphragme du deuxième membre.

De plus, le premier membre est fixé au premier organe tournant via un boulon. Le boulon comporte une tige filetée coopérant avec le premier organe tournant, une tête hexagonale et un épaulement disposé entre ladite tête et ladite tige filetée.

Le deuxième membre inclut en outre un flasque de fixation au deuxième organe tournant.

Dès lors, le moyen d'accouplement est muni d'un insert coopérant avec ledit épaulement. L'insert est alors fixé par un disque interposé entre le flasque de fixation du deuxième membre et le deuxième organe tournant.

L'épaulement comporte deux saillies représentant des cannelures mâles coopérant avec deux cannelures femelles de l'insert.

Le document US 5 588 917 présente un moyen de liaison comprenant deux chemins de transmission de couple, un chemin incluant des cannelures.

Le document US 2010/0093449 a pour objet un moyen d'accouplement à diaphragmes pourvu d'un moyen de limitation d'un désalignement axial.

Le document WO 2010/022862 est éloigné du domaine technique de l'invention. Ce document WO 20101022862 présente en effet un moyen d'accouplement pour relier deux arbres au travers d'un élément de compensation axiale autorisant un décalage axial, angulaire ou latéral entre lesdits arbres.

Afin de prévenir un dommage de l'élément de compensation dû à de fortes charges axiales de traction durant le démontage du moyen d'accouplement, le moyen d'accouplement inclut une ou plusieurs butées. Ces butées agissent axialement afin d'éviter un endommagement de l'élément de compensation sous l'effet de traction axiale excessive.

En fonctionnement, un moyen de pression applique une charge axiale pour rendre inopérantes les butées.

On connaît aussi le document US 5 364 309 et le document GB 2043207.

La présente invention a alors pour objet de proposer un moyen d'accouplement flexible autorisant un désalignement axial et radial entre deux organes tournants. Ce moyen d'accouplement vise à minimiser les risques de rupture de la transmission de couple entre lesdits organes tournants suite à la rupture d'un diaphragme ou à la liaison entre deux diaphragmes, en ayant cependant une structure relativement simple.

Selon l'invention, un moyen d'accouplement est muni d'un premier membre apte à être fixé à un premier organe tournant et d'un deuxième membre apte à être fixé à un deuxième organe tournant. Le premier membre est pourvu d'un premier diaphragme, et le deuxième membre est pourvu d'un deuxième diaphragme qui est solidarisé au premier diaphragme pour autoriser un décalage axial et / ou angulaire et / ou latéral entre les organes tournants.

Les diaphragmes peuvent être d'un type connu. La première périphérie externe du premier diaphragme peut être solidarisée à la deuxième périphérie externe du deuxième diaphragme par un système de fixation. Un tel système de fixation peut être un moyen de soudure ou encore des moyens de boulonnage.

Le moyen d'accouplement inclut aussi un dispositif de secours de transmission de couple pour lier le premier organe tournant au deuxième organe tournant en cas de rupture d'au moins un diaphragme ou d'une liaison entre les diaphragmes.

Le moyen d'accouplement est notamment remarquable en ce que le dispositif de secours comporte au moins un système à baïonnette incluant une protubérance solidaire d'un membre coopérant avec une rainure coudée solidaire de l'autre membre en étant insérée dans la rainure coudée par un mouvement de poussée-rotation. De plus, le moyen d'accouplement comporte en l'absence de ladite rupture d'un diaphragme ou d'une liaison entre les diaphragmes un jeu axial en compression, un jeu axial en traction et un jeu circonférentiel entre chaque protubérance et des parois délimitant la rainure coudée correspondante. Il est à noter que le jeu circonférentiel peut aussi être qualifié de jeu angulaire.

Si un diaphragme ou la liaison entre les diaphragmes rompt, le dispositif de transmission de couple permet de pallier cette rupture en assurant la continuité de la transmission du mouvement et du couple entre le premier membre et le deuxième membre.

En effet, la protubérance vient en contact avec les parois délimitant la rainure coudée pour permettre l'entraînement en rotation d'un membre par l'autre membre. Le jeu circonférentiel est alors naturellement comblé pour autoriser cet entraînement. De même l'écartement axial entre les membres est limité aux jeux axiaux.

De plus, un tel dispositif de secours n'entrave pas le fonctionnement du moyen d'accouplement dans des conditions normales, à savoir en l'absence d'une rupture d'un diaphragme ou de la liaison entre les diaphragmes.

En effet, les jeux axiaux, le jeu circonférentiel et la flexibilité des diaphragmes autorisent un décalage axial et radial entre le premier membre et le deuxième membre.

Un tel dispositif de secours présente aussi l'avantage de protéger les diaphragmes en cas de sollicitations supérieures à la normale. Ce dispositif de secours agit en effet comme une butée de mise en contrainte.

En outre, le moyen d'accouplement est simple dans la mesure où ce moyen d'accouplement peut être limité à deux organes mécaniques, à savoir le premier membre et le deuxième membre.

Ce moyen d'accouplement peut de plus comporter une ou plusieurs des caractéristiques additionnelles suivantes.

Par exemple, le dispositif de secours peut inclure une pluralité de systèmes à baïonnette. Cette caractéristique permet de répartir le couple à transmettre en cas de défaillances des diaphragmes.

Toutes les protubérances sont éventuellement solidaires du même membre, et toutes les rainures coudées sont solidaires de l'autre membre. Cette réalisation présente notamment l'avantage de simplifier la structure du moyen d'accouplement

Par ailleurs, chaque membre comportant un corps solidaire d'une base d'un diaphragme, un corps est éventuellement pourvu d'au moins une protubérance et l'autre corps est pourvu d'au moins une rainure coudée.

Un tel corps peut être un corps cylindrique. Un tel corps représente un moyen d'interface simple disposé entre un organe tournant et un diaphragme, ainsi qu'entre cet organe tournant et un organe du dispositif de secours.

Le moyen d'accouplement comporte favorablement un jeu longitudinal entre les corps pour autoriser un décalage axial et radial entre ces corps. Les corps n'entravent donc pas le fonctionnement du moyen d'accouplement.

Selon un autre aspect, au moins une protubérance se situe dans un plan défini par un diaphragme du membre muni de cette protubérance.

Au moins une rainure coudée d'un membre saille d'un plan défini par le diaphragme d'un membre pour s'étendre à l'intérieur de l'autre membre afin de coopérer avec une protubérance.

Par ailleurs, chaque rainure coudée peut avoir une forme de L en présentant une gorge longitudinale suivie d'une gorge circonférentielle, une protubérance pénétrant dans la gorge longitudinale par un mouvement de poussée puis dans la gorge circonférentielle par un mouvement rotatif.

Selon une réalisation préférée, le moyen d'accouplement comporte :
- un premier membre muni d'un premier corps cylindrique creux s'étendant axialement, une première base d'un premier diaphragme étant solidaire du premier corps,
- un deuxième membre muni d'un deuxième corps cylindrique creux s'étendant axialement, une deuxième base d'un deuxième diaphragme étant solidaire du deuxième corps, une deuxième périphérie externe du deuxième diaphragme étant fixée à une première périphérie externe du premier diaphragme,

- une pluralité de protubérances solidaires du deuxième corps, chaque protubérance saillant dans un espace interne dudit deuxième corps,
- une rainure coudée par protubérance, chaque rainure étant solidaire dudit premier corps et saillant dans ledit espace interne, chaque protubérance étant disposée dans une rainure coudée afin de lier notamment angulairement le premier membre et le deuxième membre en cas de rupture d'un diaphragme.

En outre, le moyen d'accouplement peut comporter un premier dispositif de fixation réversible pour fixer une protubérance à un membre, et un deuxième dispositif de fixation réversible pour fixer une rainure coudée à un membre.

Le dispositif de secours est alors amovible. De plus, le dispositif de secours peut être agencé sur un moyen d'accouplement existant.

Outre un moyen d'accouplement flexible, l'invention vise une transmission mécanique tournante qui est munie d'un premier organe tournant et d'un deuxième organe tournant.

Cette transmission mécanique inclut un moyen d'accouplement du type décrit précédemment.

L'invention et ses avantages apparaîtront avec plus de détails dans le cadre de la description qui suit avec des exemples de réalisation donnés à titre illustratif en référence aux figures annexées qui représentent :
- la figure 1, une vue éclatée d'un moyen d'accouplement,
- la figure 2, une coupe longitudinale d'un moyen d'accouplement selon une première variante,
- la figure 3, une coupe transversale partielle d'un moyen d'accouplement selon une première variante, et
- la figure 4, une coupe longitudinale d'un moyen d'accouplement selon une deuxième variante.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Les termes « longitudinal » et « axial » sont relatifs à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

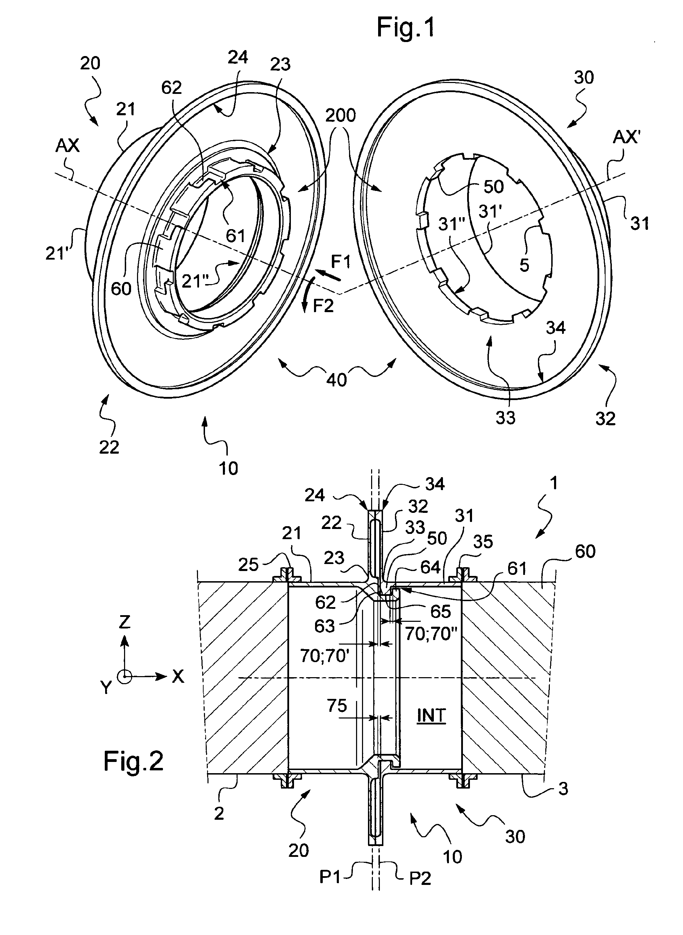

La figure 1 présente un moyen d'accouplement 10 pour relier mécaniquement deux organes tournants en autorisant un décalage axial, angulaire et latéral entre ces organes tournants.

Dès lors, le moyen d'accouplement 10 comprend d'un premier membre 20 muni d'un premier diaphragme 22.

Plus précisément, le premier membre 20 représenté comporte un premier corps 21 cylindrique creux. Ce premier corps 21 s'étend longitudinalement d'une première extrémité distale 21' vers une première extrémité proximale 21" le long d'un premier axe de rotation AX.

Une première base annulaire 23 du premier diaphragme 22 est alors solidaire de la première extrémité proximale 21". Par exemple, cette base annulaire est soudée à la première extrémité proximale 21".

Le premier diaphragme a alors une forme annulaire en s'étendant radialement de sa première base annulaire 23 vers une périphérie externe 24.

Par ailleurs, la première extrémité distale 21' du premier corps peut comprendre un premier moyen de fixation non visible sur la figure 1. Le premier moyen de fixation permet alors de solidariser le premier membre 20 à un premier organe tournant.

De plus, le moyen d'accouplement 10 comprend un deuxième membre 30 muni d'un deuxième diaphragme 32.

Le deuxième membre 30 représenté comporte un deuxième corps 31 cylindrique creux. Ce deuxième corps 31 s'étend longitudinalement d'une deuxième extrémité distale 31' vers une deuxième extrémité proximale 31" le long d'un deuxième axe de rotation AX'.

Une deuxième base annulaire 33 du deuxième diaphragme 32 est alors solidaire de la deuxième extrémité proximale 31". Par exemple, cette base annulaire est soudée à la deuxième extrémité proximale 31".

Le deuxième diaphragme a alors une forme annulaire en s'étendant radialement de sa deuxième base annulaire 33 vers une périphérie externe 34.

Par ailleurs, la deuxième extrémité distale 34 du deuxième corps 30 peut comprendre un deuxième moyen de fixation non visible sur la figure 1. Le deuxième moyen de fixation permet alors de solidariser le deuxième membre 30 à un deuxième organe tournant.

Dès lors, le moyen d'accouplement est muni d'un système de fixation pour lier la première extrémité distale 24 à la deuxième extrémité distale 34.

Ce système de fixation peut inclure un cordon de soudure ou encore une pluralité de boulons par exemple.

La flexibilité des diaphragmes permet au mécanisme d'accouplement de tolérer un décalage axial, angulaire ou encore latéral entre le premier membre et le deuxième membre, et par suite entre deux organes tournants.

En outre, le moyen d'accouplement 10 comporte un dispositif de secours 40 pour permettre l'entraînement d'un membre par l'autre membre en cas de rupture de la liaison mécanique incluant les diaphragmes et le système de fixation.

Ce dispositif de secours 40 inclut au moins un système à baïonnette 200.

Chaque système à baïonnette 200 est muni d'une part d'une protubérance 50 solidaire d'un membre, tel qu'un ergot, et d'autre part d'une rainure coudée 60 solidaire de l'autre membre. Une protubérance est alors insérée dans une rainure coudée pour un mouvement associant une poussée F1 puis une rotation F2.

Une telle rainure coudée a éventuellement une forme de L. Chaque rainure coudée peut donc présenter une gorge longitudinale 61 parallèle à l'axe de rotation du membre associé, suivie d'une gorge circonférentielle 62.

Par exemple, avant de solidariser les diaphragmes, un opérateur introduit chaque protubérance 50 dans une rainure coudée 60, puis l'opérateur positionne un membre par rapport à l'autre membre en réalisant ce mouvement de poussée-rotation. Chaque protubérance 50 est alors déplacée dans une gorge longitudinale 61 par un mouvement translatif de poussée F1 puis dans une gorge circonférentielle 62 par un mouvement rotatif F2.

Dès lors, l'opérateur solidarise les diaphragmes l'un à l'autre pour finir l'assemblage du moyen d'accouplement.

Par ailleurs, le dispositif de secours 40 peut inclure au moins deux systèmes à baïonnette 200 identiques, à savoir neuf systèmes à baïonnette 200 selon l'exemple représenté.

Par suite, toutes les protubérances 50 peuvent être identiques et solidaires d'un même membre, et toutes les rainures coudées peuvent être identiques et solidaires de l'autre membre. Le moyen d'accouplement et l'agencement d'un membre par rapport à l'autre sont alors simplifiés.

La figure 2 présente un moyen d'accouplement 10 assemblé au sein d'une transmission mécanique 1.

La transmission mécanique 1 inclut alors un premier organe tournant 2 solidarisé à un premier corps 21 d'un premier membre 20 par un premier moyen de fixation 25. De plus, la transmission mécanique 1 possède un deuxième organe tournant 3 solidarisé à un deuxième corps 31 d'un deuxième membre 30 par un deuxième moyen de fixation 35.

Le moyen d'accouplement 10 étant assemblé, le premier diaphragme 22 du premier membre 20 est fixé au deuxième diaphragme 32 du deuxième membre 30. A cet effet, une soudure par faisceau d'électrons peut être par exemple entreprise.

En outre, chaque protubérance 50 est disposée dans une gorge circonférentielle 62 d'une rainure coudée 50.

Cette figure 2 fait apparaitre une réalisation impliquant l'agencement de chaque protubérance dans un plan P2 défini par un diaphragme 32. En l'occurrence, chaque protubérance 50 saille de la deuxième extrémité proximale 31" vers l'intérieur INT du deuxième corps. Chaque protubérance peut alors représenter une extension du deuxième diaphragme saillant à l'intérieur du deuxième corps.

A l'inverse, chaque rainure coudée saille d'un plan P1 défini par le diaphragme 22 d'un membre 20 pour s'étendre à l'intérieur INT de l'autre membre 30. En l'occurrence, chaque rainure coudée est ménagée dans un cylindre solidaire du premier corps 21, ce cylindre s'étendant à partir de la première extrémité proximale 21' du premier corps à l'intérieur INT du deuxième corps 31 pour coopérer aves lesdites protubérances 50.

Afin d'autoriser un décalage entre le premier organe tournant 2 et le deuxième organe tournant en l'absence de rupture d'un diaphragme ou du système de fixation des diaphragmes, le moyen d'accouplement 10 comporte deux jeux axiaux 70 et un jeu circonférentiel 80 entre chaque protubérance 50 et des parois 63, 64 délimitant la rainure coudée 60 correspondante.

En effet, la gorge circonférentielle est délimitée axialement à savoir selon une direction parallèle à l'axe de rotation du membre muni de cette gorge, par une paroi proximale 63 et une paroi distale 64. La paroi proximale 63 est alors plus proche du premier diaphragme que la paroi distale 64. Autrement dit, la paroi proximale 63 peut être à l'extérieur du deuxième corps 31 alors que la paroi distale est présente à l'intérieur INT du deuxième corps.

La paroi proximale 63 et la paroi distale 64 sont parallèles entre elles, et parallèles au premier plan P1 et au deuxième plan P2 contenant les diaphragmes.

Un premier jeu axial 70' sépare alors une protubérance de la paroi proximale 63, un deuxième jeu axial 70" séparant cette protubérance de la paroi distale 64. Le premier jeu correspond alors à la déformation axiale maximale admissible pour le moyen d'accouplement en compression, le deuxième jeu correspondant à la déformation axiale maximale admissible pour le moyen d'accouplement en traction.

Par contre, la protubérance peut reposer sur un fond 65 de la rainure circonférentielle, ou du moins présenter un simple jeu de fabrication avec ce fond.

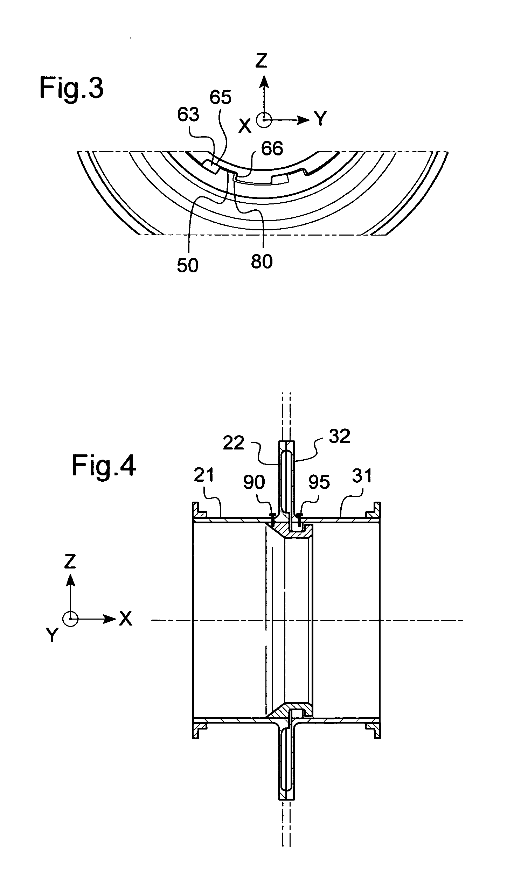

Par ailleurs, en référence à la figure 3, la gorge circonférentielle est délimitée circonférentiellement par une paroi dite paroi radiale 66, sensiblement orthogonale à la paroi proximale 63 et à la paroi distale 64.

Un jeu circonférentiel 80 sépare alors une protubérance de la paroi radiale 66.

En outre, un jeu longitudinal 75 est présent entre le premier corps 21 et le deuxième corps 31 dans les zone dépourvues d'un système à baïonnette.

Si un diaphragme ou la liaison entre les diaphragmes rompt, le moyen d'accouplement reste efficace, indépendamment du sens de rotation des membres. En effet, la forme en L des rainures coudées permet de conserver tous les avantages du dispositif de secours.

Selon un premier sens de rotation, chaque protubérance se déplace dans une gorge circonférentielle pour atteindre une paroi radiale 66, en comblant de fait le jeu circonférentielle.

Selon un deuxième sens de rotation, chaque protubérance parcourt toute la longueur de la rainure circonférentielle puis bute contre l'extrémité de cette rainure circonférentielle opposée à la paroi radiale 66.

Selon un autre aspect, chaque système à baïonnette peut être fixe ou amovible.

Par exemple, selon la première variante de la figure 2, chaque protubérance est fixée de manière inamovible à un corps, et chaque rainure est aussi fixée de manière inamovible à un corps.

Par contre, selon la deuxième variante de la figure 4, le moyen d'accouplement 10 comporte un premier dispositif de fixation 95 réversible pour fixer une protubérance 50 à un membre 30, et un deuxième dispositif de fixation 90 réversible pour fixer une rainure coudée 60 à un membre 20.

Par exemple, les protubérances sont solidaires d'un anneau fixé par des moyens réversibles usuels au deuxième corps, tels que des moyens mettant en oeuvre des visseries éventuellement.

De même, les rainures coudées peuvent être ménagées dans un cylindre fixé par des moyens réversibles usuels au premier corps.

Eventuellement, le moyen d'accouplement peut comprendre deux moyens amovibles identiques comprenant chacun au moins une paire de protubérances et au moins une paire de rainures coudées. Un moyen amovible est alors fixé par un premier dispositif de fixation à un membre, et l'autre moyen amovible est fixé par un deuxième dispositif de fixation à un autre membre.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Moyen d'accouplement (10) muni d'un premier membre (20) apte à être fixé à un premier organe tournant (2) et d'un deuxième membre (30) apte à être fixé à un deuxième organe tournant (3), le premier membre (20) étant pourvu d'un premier diaphragme (22) et le deuxième membre (30) étant pourvu d'un deuxième diaphragme (32) qui est solidarisé au premier diaphragme (22) pour autoriser un décalage axial et / ou angulaire et / ou latéral entre lesdits organes tournants (2, 3), le moyen d'accouplement (10) incluant un dispositif de secours (40) de transmission de couple pour lier le premier organe tournant (2) au deuxième organe tournant (3) en cas de rupture d'au moins un diaphragme ou d'une liaison entre les diaphragmes,
**caractérisé en ce que** ledit dispositif de secours (40) comporte au moins un système à baïonnette incluant une protubérance (50) solidaire d'un membre (30) coopérant avec une rainure coudée (60) solidaire de l'autre membre (20) en étant insérée dans la rainure coudée (60) par un mouvement de poussée-rotation (F1, F2), ledit moyen d'accouplement (10) comportant en l'absence de ladite rupture un jeu axial en compression (70') ainsi qu'un jeu axial en traction (70") et un jeu circonférentiel (80) entre chaque protubérance (50) et des parois (63, 64, 66) délimitant la rainure coudée (60) correspondante.

2. Moyen d'accouplement selon la revendication 1,
**caractérisé en ce que**, ledit dispositif de secours (40) incluant une pluralité de systèmes à baïonnette, toutes les protubérances (50) sont solidaires du même membre (30), et toutes les rainures coudées (60) sont solidaires du même membre (20).

3. Moyen d'accouplement selon l'une quelconque des revendications 1 à 2,
**caractérisé en ce que** chaque membre (20, 30) comportant un corps (21, 31) solidaire d'une base (23, 33) d'un diaphragme (22, 32), un corps (31) est pourvu d'au moins une protubérance (50) et l'autre corps (21) est pourvu d'au moins une rainure coudée (60).

4. Moyen d'accouplement selon la revendication 3,
**caractérisé en ce que** ledit moyen d'accouplement (10) comporte un jeu longitudinal (75) entre lesdits corps (21, 31).

5. Moyen d'accouplement selon l'une quelconque des revendications 1 à 4,
**caractérisé en ce qu'**au moins une protubérance (50) se situe dans un plan (P2) défini par un diaphragme (32).

6. Moyen d'accouplement selon l'une quelconque des revendications 1 à 5,
**caractérisé en ce qu'**au moins une rainure coudée (60) d'un membre (20) saille d'un plan (P1) défini par le diaphragme (22) de ce membre (20) pour s'étendre à l'intérieur (INT) de l'autre membre (30).

7. Moyen d'accouplement selon l'une quelconque des revendications 1 à 6,
**caractérisé en ce que** chaque rainure coudée (60) a une forme de L en présentant une gorge longitudinale (61) suivie d'une gorge circonférentielle (62), une protubérance (50) pénétrant dans la gorge longitudinale (61) par un mouvement de poussée (F1) puis dans la gorge circonférentielle (62) par un mouvement rotatif (F2).

8. Moyen d'accouplement selon l'une quelconque des revendications 1 à 7,
**caractérisé en ce que** le moyen d'accouplement (10) comporte un premier dispositif de fixation (95) réversible pour fixer une protubérance (50) à un membre (30), et un deuxième dispositif de fixation (90) réversible pour fixer une rainure coudée (60) à un membre (20).

9. Moyen d'accouplement selon l'une quelconque des revendications 1 à 8,
**caractérisé en ce que** le moyen d'accouplement (10) comporte :
- un premier membre (20) muni d'un premier corps (21) cylindrique creux s'étendant axialement, une première base (23) d'un premier diaphragme (22) étant solidaire du premier corps (21),
- un deuxième membre (30) muni d'un deuxième corps (31) cylindrique creux s'étendant axialement, une deuxième base (33) d'un deuxième diaphragme (32) étant solidaire du deuxième corps (31), une deuxième périphérie externe (34) du deuxième diaphragme (32) étant fixé à une première périphérie externe (24) du premier diaphragme (22),
- une pluralité de protubérances (50) solidaires du deuxième corps (32), chaque protubérance (50) saillant dans un espace interne (INT) dudit deuxième corps (32),
- une rainure coudée (60) par protubérance (50), chaque rainure coudée (60) étant solidaire dudit premier corps (21) et saillant dans ledit espace interne (INT), chaque protubérance (50) étant disposée dans une rainure coudée (60) afin de lier angulairement le premier membre (20) et le deuxième membre (30) en cas de rupture d'un diaphragme (22, 32).

10. Transmission mécanique (1) tournante munie d'un premier organe tournant (2) et d'un deuxième organe tournant (3),
**caractérisée en ce que** la transmission mécanique (1) inclut un moyen d'accouplement (10) selon l'une quelconque des revendications 1 à 9.

## Patentansprüche

1. Kopplungsmittel (10) mit einem ersten Glied (20), das an einem ersten sich drehenden Organ (2) befestigt werden kann, und einem zweiten Glied (30), das an einem zweiten sich drehenden Organ (3) befestigt werden kann, wobei das erste Glied (20) mit einer ersten Blende (22) versehen ist, und das zweite Glied (30) mit einer zweiten Blende (32) versehen ist, die an der ersten Blende (22) befestigt ist, um einen axialen und/oder winkehnäßigen und/oder seitlichen Versatz zwischen den sich drehenden Organen (2, 3) zu ermöglichen, wobei das Kopplungsmittel (10) eine Hilfsvorrichtung (40) zur Übertragung eines Drehmoments umfasst, um das erste sich drehende Organ (2) im Falle eines Bruchs mindestens einer Blende oder einer Verbindung zwischen den Blenden mit dem zweiten sich drehenden Organ (3) zu verbinden,
**dadurch gekennzeichnet, dass** die Hilfsvorrichtung (40) mindestens ein Bajonettsystem aufweist mit einem Höcker (50), der mit einem Glied (30) fest verbunden ist, der mit einer abgewinkelten Nut (60) zusammenwirkt, die mit dem anderen Glied (20) fest verbunden ist, indem der Höcker in die abgewinkelte Nut (60) durch eine Schub-Dreh-Bewegung (F1, F2) eingeführt wird, wobei das Kopplungsmittel (10) in Abwesenheit des Bruchs ein axiales Spiel (70') bei Druckbelastung sowie ein axiales Spiel (70") bei Zugbelastung und ein Spiel (80) in Umfangsrichtung zwischen jedem Höcker (50) und den Wänden (63, 64, 66), die die entsprechende abgewinkelte Nut (60) begrenzen, aufweist.

2. Kopplungsmittel nach Anspruch 1,
**dadurch gekennzeichnet, dass** die Hilfsvorrichtung (40) eine Mehrzahl von Bajonettsystemen aufweist, wobei alle Höcker (50) mit demselben Glied (30) fest verbunden sind, und alle abgewinkelten Nuten (60) mit demselben Glied (20) fest verbunden sind.

3. Kopplungsmittel nach einem der Ansprüche 1 bis 2,
**dadurch gekennzeichnet, dass** jedes Glied (20, 30) einen Körper (21, 31) aufweist, der mit einer Basis (23, 33) einer Blende (22, 32) fest verbunden ist, wobei ein Körper (31) mit mindestens einem Höcker (50) versehen ist, und der andere Körper (21) mit mindestens einer abgewinkelten Nut (60) versehen ist.

4. Kopplungsmittel nach Anspruch 3,
**dadurch gekennzeichnet, dass** das Kopplungsmittel (10) ein längs verlaufendes Spiel (75) zwischen den Körpern (21, 31) aufweist.

5. Kopplungsmittel nach einem der Ansprüche 1 bis 4,
**dadurch gekennzeichnet, dass** mindestens ein Höcker (50) in einer Ebene (P2) liegt, die durch eine Blende (32) definiert ist.

6. Kopplungsmittel nach einem der Ansprüche 1 bis 5,
**dadurch gekennzeichnet, dass** mindestens eine abgewinkelte Nut (60) eines Glieds (20) über eine Ebene (P1) vorsteht, die durch die Blende (22) dieses Glieds (20) definiert ist, um sich in das Innere (INT) des anderen Glieds (30) zu erstrecken.

7. Kopplungsmittel nach einem der Ansprüche 1 bis 6,
**dadurch gekennzeichnet, dass** jede abgewinkelte Nut (60) L-förmig ist, indem sie eine Längsnut (61) aufweist, gefolgt von einer Umfangsnut (62), wobei ein Höcker (50) durch eine Schubbewegung (F1) in die Längsnut (61) eindringt und anschließend durch eine Drehbewegung (F2) in die Umfangsnut.

8. Kopplungsmittel nach einem der Ansprüche 1 bis 7,
**dadurch gekennzeichnet, dass** das Kopplungsmittel (10) eine erste reversible Befestigungsvorrichtung (95) aufweist, um einen Höcker (50) an einem Glied (30) zu befestigen, und eine zweite reversible Befestigungsvorrichtung (90), um eine abgewinkelte Nut (60) an einem Glied (20) zu befestigen.

9. Kopplungsmittel nach einem der Ansprüche 1 bis 8,
**dadurch gekennzeichnet, dass** das Kopplungsmittel (10) aufweist:
- ein erstes Glied (20) mit einem ersten hohlzylindrischen Körper (21), der sich axial erstreckt, wobei eine erste Basis (23) einer ersten Blende (22) mit dem ersten Körper (21) fest verbunden ist,
- ein zweites Glied (30) mit einem zweiten hohlzylindrischen Körper (31), der sich axial erstreckt, wobei eine zweite Basis (33) einer zweiten Blende (32) fest mit dem zweiten Körper (31) verbunden ist, wobei ein zweiter Außenrand (34) der zweiten Blende (32) an einem ersten Außenrand (24) der ersten Blende (22) befestigt ist,
- eine Mehrzahl von Höckern (50), die mit dem zweiten Körper (32) fest verbunden sind, wobei jeder Höcker (50) in einen Innenraum (INT) des zweiten Körpers (32) hineinragt,
- eine abgewinkelte Nut (60) pro Höcker (50), wobei jede abgewinkelte Nut (60) mit dem ersten Körper (21) fest verbunden ist und in den Innenraum (INT) vorsteht, wobei jeder Höcker (50) in einer abgewinkelten Nut (60) angeordnet ist, um das erste Glied (20) und das zweite Glied (30) im Falle eines Bruchs einer Blende (22, 32) winkelmäßig zu verbinden.

10. Sich drehendes mechanisches Getriebe (1) mit einem ersten sich drehenden Organ (2) und einem zweiten sich drehenden Organ (3), **dadurch gekennzeichnet, dass** das mechanische Getriebe (1) ein Kopplungsmittel (10) nach einem der Ansprüche 1 bis 9 aufweist.

## Claims

1. A coupling means (10) equipped with a first member (20) suitable for being fixed to a first rotary element (2) and a second member (30) suitable for being fixed to a second rotary element (3), the first member (20) being provided with a first diaphragm (22) and the second member (30) being provided with a second diaphragm (32) which is joined to the first diaphragm (22) to allow an axial and/or angular and/or lateral offset between the said rotary elements (2, 3), the coupling means (10) including a backup device (40) for transmitting torque for connecting the first rotary element (2) to the second rotary element (3) in the event of at least one diaphragm or at least one connection between the diaphragms rupturing, **characterised in that** the said backup device (40) comprises at least one bayonet system including a protuberance (50) which is joined to a member (30), which cooperates with an elbowed channel (60) joined to the other member (20), and which is inserted in the elbowed channel (60) by a push-and-rotate movement (F1, F2), in the absence of the said rupture the said coupling means (10) comprising an axial compressive play (70') and an axial tractional play (70") and a circumferential play (80) between each protuberance (50) and walls (63, 64, 66) delimiting the corresponding elbowed channel (60).

2. A coupling means according to Claim 1, **characterised in that**, the said backup device (40) including a plurality of bayonet systems, all the protuberances (50) are joined to the same member (30) and all the elbowed channels (60) are joined to the same member (20).

3. A coupling means according to either of Claims 1 and 2, **characterised in that**, each member (20, 30) comprising a body (21, 31) joined to a base (23, 33) of a diaphragm (22, 32), one body (31) is provided with at least one protuberance (50) and the other body (21) is provided with at least one elbowed channel (60).

4. A coupling means according to Claim 3, **characterised in that** the said coupling means (10) comprises a longitudinal play (75) between the said bodies (21, 31).

5. A coupling means according to any one of Claims 1 to 4, **characterised in that** at least one protuberance (50) is located in a plane (P2) defined by a diaphragm (32).

6. A coupling means according to any one of Claims 1 to 5, **characterised in that** at least one elbowed channel (60) of a member (20) projects from a plane (P1) defined by the diaphragm (22) of this member (20) to extend into the interior (INT) of the other member (30).

7. A coupling means according to any one of Claims 1 to 6, **characterised in that** each elbowed channel (60) is in the shape of an L, having a longitudinal groove (S1) followed by a circumferential groove (62), a protuberance (50) engaging in the longitudinal groove (61) by means of a pushing movement (F1) and then in the circumferential groove (62) by means of a rotary movement (F2).

8. A coupling means according to any one of Claims 1 to 7, **characterised in that** the coupling means (10) comprises a first reversible fixing device (95) for fixing a protuberance (50) to a member (30), and a second reversible fixing device (90) for fixing an elbowed channel (60) to a member (20).

9. A coupling means according to any one of Claims 1 to 8,
**characterised in that** the coupling means (10) comprises:
- a first member (20) equipped with a first cylindrical hollow body (21) that extends axially, a first base (23) of a first diaphragm (22) being joined to the first body (21),
- a second member (30) equipped with a second cylindrical hollow body (31) that extends axially, a second base (33) of a second diaphragm (32) being joined to the second body (31) and a second outer periphery (34) of the second diaphragm (32) being fixed to a first outer periphery (24) of the first diaphragm (22),
- a plurality of protuberances (50) joined to the second body (32), each protuberance (50) projecting into an interior space (INT) of the said second body (32),
- one elbowed channel (60) for each protuberance (50), each elbowed channel (60) being joined to the said first body (21) and projecting into the said interior space (INT), and each protuberance (50) being arranged in an elbowed channel (60) in order to connect the first member (20) and the second member (30) angularly in the event that a diaphragm (22, 32) ruptures.

10. A rotary mechanical transmission (1) equipped with a first rotary element (2) and a second rotary element (3), **characterised in that** the mechanical transmission (1) includes a coupling means (10) according to any one of Claims 1 to 9.
